# EUROPEAN PATENT SPECIFICATION

(11) **EP 2 367 440 B1**
(45) Date of publication and mention of the grant of the patent: **03.07.2013**
(21) Application number: 09760892.1
(22) Date of filing: 01.12.2009
(51) Int. Cl.: A23D 7/04

(54) **PROCESS FOR THE PREPARATION OF AN EDIBLE FAT CONTINUOUS SPREAD**
VERFAHREN ZUR HERSTELLUNG EINES ESSBAREN FETTS MIT KONTINUIERLICHER FETTPHASE
PROCÉDÉ POUR LA PRÉPARATION D'UNE PÂTE À TARTINER EN CONTINU À BASE DE GRAISSES COMESTIBLES

(30) Priority: 19.12.2008 EP 08172286
(43) Date of publication of application: 28.09.2011
(73) Proprietor: Unilever NV, 3013 AL Rotterdam (NL); Unilever PLC, Blackfriars London Greater London EC4Y 0DY (GB)
(72) Inventor: DOBENESQUE, Marie, N, NL-3133 AT Vlaardingen (NL); LEENHOUTS, Abraham, NL-3133 AT Vlaardingen (NL); TIO, Farley, F, NL-3133 AT Vlaardingen (NL)
(74) Representative: Wurfbain, Gilles L.
(86) International application number: PCT/EP2009/066107
(87) International publication number: WO 2010/069753

(56) References cited:
- EP-A- 1 557 090
- WO-A-2006/087091

## Description

### Field of the invention

The present invention relates to a process for the preparation of an edible fat continuous spread.

### Background of the invention

Fat continuous food products are well known in the art and include for example shortenings comprising a fat phase and water in oil spreads like margarine comprising a fat phase and an aqueous phase.

The fat phase of margarine and similar edible fat continuous spreads is often a mixture of liquid oil (i.e. fat that is liquid at ambient temperature) and fat which is solid at ambient temperatures. The solid fat, also called structuring fat or hardstock fat, serves to structure the fat phase (being the case in for example a shortening as well as in a water in oil emulsion) and helps to stabilize the aqueous phase, if present, by forming a fat crystal network. For a margarine or spread, ideally the structuring fat has such properties that it melts or dissolves at mouth temperature. Otherwise the product may have a heavy and/or waxy mouthfeel.

Fat soluble emulsifiers like for example monoglyceride are used when fat continuous spreads are made as they aid the forming of a fat crystal network and help to stabilize the water in oil emulsion.

Important aspects of a fat continuous spread like for example margarine and low fat spread, the low fat spread usually comprising from 10 to 40 wt% fat on total composition, are for example hardness, spreadability and ability to withstand temperature cycling. Temperature cycling means that the product is subjected to low and high temperatures (e.g. when the consumer takes the product out of the refrigerator and leaves it for some time at the table to use it). This may have a negative influence on the structure of the spread (like for example destabilization of the emulsion or oil-exudation).

Generally edible fat continuous food products like for example margarines and similar edible fat continuous spreads are prepared according to known processes that encompass the following steps:
1. Mixing of the liquid oil, the structuring fat and if present the aqueous phase at a temperature at which the structuring fat is definitely liquid;
2. cooling of the mixture under high shear to induce crystallization of the structuring fat to create an emulsion;
3. formation of a fat crystal network to stabilize the resulting emulsion and give the product some degree of firmness;
4. modification of the crystal network to produce the desired firmness, confer plasticity and reduce the water droplet size.

These steps are usually conducted in a process that involves apparatus that allow heating, cooling and mechanical working of the ingredients, such as the churn process or the votator process. The churn process and the votator process are described in the Ullmans Encyclopedia, Fifth Edition, Volume A 16, pages 156-158.

A disadvantage of these processes is that the complete composition (including the liquid oil, structuring fat and if present the aqueous phase) is subjected to a heating step and a cooling step. This requires a lot of energy. For a spread comprising for example 6 wt% structuring fat the whole composition (100 wt%) has to be heated and cooled.

Another disadvantage of the known processes is that the choice of fats that can practically be used as structuring agent is rather limited. If the melting point of the structuring agent is too high the melting properties in the mouth are unsatisfactory. If on the other hand, the melting point is too low, the emulsion stability will be negatively affected. Moreover the amount of saturated fatty acids (SAFA) in the structuring agent is usually relatively high. Also trans fatty acid may be present. Some experts have called for reductions in these fatty acids to improve cardiovascular health.

Some consumers prefer spreads that have a low energy density (for example products that are low in total fat) and/or are low in SAFA but still have a good nutritional profile (by providing for example essential fatty acids like omega-3 and omega-6).

A further disadvantage of the known processes is that the product may deteriorate due to the changes in temperature caused by the heating and cooling step.

Alternative processes have been described wherein the structuring fat is added as fat powder (i.e. crystallized fat) thereby eliminating the need to heat the whole composition to above the melting temperature of the structuring fat.

EP 1865786 A discloses a process for the preparation of a spreadable edible dispersion wherein a mixture of oil and solid structuring agent particles is subjected to stirring and an aqueous phase is gradually added to the mixture until a dispersion is obtained. The solid structuring agent particles have a microporous structure of submicron size particles and can be prepared using a micronisation process. A high fat spreadable margarine (70 wt% fat) and a low fat spreads (33 and 40 wt% fat) are disclosed. The emulsifier, being a monoglyceride, was added to the liquid oil.

We have found that a fat continuous spread, like for example a margarine or low fat spread, prepared using fat powder and wherein the fat soluble emulsifier is added to the fat phase does not result in an optimal water droplet size in the spread.

It is an object of the present invention to provide a process to prepare an edible fat continuous spread that requires less energy to make, more specifically a low fat continuous spread that requires less energy to make.
It is another object of the present invention to provide a process to prepare an edible fat continuous spread with improved structure, more specifically a low fat continuous spread with improved structure.
A further object of the invention is to provide a process to prepare an edible fat continuous spread with improved properties like spreadability and/or smaller water droplets, more specifically a low fat continuous spread with improved properties like spreadability and/or smaller water droplets.

### Summary of the invention

It was found that one or more of the above objects is attained by a process wherein at least part of the fat soluble emulsifier is added to the aqueous phase during preparation.

Accordingly the invention relates to a process for the preparation of an edible fat continuous spread comprising an aqueous phase and further comprising a fat soluble emulsifier, comprising the steps of:
a. mixing fat powder and oil wherein the fat powder comprises structuring fat to provide a slurry;
b. providing an aqueous phase;
c. mixing the slurry and aqueous phase to form an oil continuous emulsion;
wherein the aqueous phase as provided under b) comprises at least part of the fat soluble emulsifier.

### Detailed description of the invention

Weight percentage (wt%) is based on the total weight of the composition unless otherwise stated.
The terms 'fat' and 'oil' are used interchangeably. Where applicable the prefix 'liquid' or 'solid' is added to indicate if the fat or oil is liquid or solid at ambient temperature as understood by the person skilled in the art. The term 'structuring fat' refers to a fat that is solid at ambient temperature.
Ambient temperature is a temperature of about 20 degrees Celsius.

The process of the present invention uses fat powder comprising structuring fat and does not require the need to form the crystal network to make the spread by heating and cooling the whole composition. Such processes have been described previously in for example EP 1865786 A. This process is characterized in that (part of) the structuring fat is pre-crystallized and does not form from the fat phase (comprising the structuring fat and liquid oil) optionally including the aqueous phase as is the case in conventional ways of preparing a spread. One of the main advantages of this process is that it requires less energy to make.

### Fat powder

The fat powder comprises structuring fat and preferably comprises at least 80 wt% of structuring fat, more preferably at least 85 wt%, even more preferably at least 90 wt%, still more preferably at least 95 wt% and most preferably at least 98 wt%. Most preferably the edible fat powder essentially consists of structuring fat.

The structuring fat may be a single fat or a mixture of different fats. The structuring fat may be of vegetable, animal or marine origin. Preferably at least 50 wt% of the structuring fat (based on total amount of structuring fat) is of vegetable origin, more preferably at least 60 wt%, even more preferably at least 70 wt%, still more preferably at least 80 wt%, even still more preferably at least 90 wt% and even still more further preferably at least 95 wt%. Most preferably the structuring fat essentially consists of structuring fat of vegetable origin.

The structuring fat as present in the edible fat powder preferably has a solid fat content N10 from 50 to 100, N20 from 26 to 95 and N35 from 5 to 60.

The amount of fat powder used is suitably chosen such that the required structuring (i.e. stable emulsion) is obtained. It will be appreciated that the amount of fat powder depends on the amount of structuring fat in the fat powder and the desired amount of structuring fat on total product. Preferably the amount of structuring fat on total amount of product is 1 to 20 wt%, more preferably 2 to 15 wt% and even more preferably 4 to 12 wt%.

Suitable methods to prepare the fat powder include for example Super Critical Melt Micronisation (ScMM), also known as particles from gas saturated solutions (PGSS). This is a commonly known method and is for example described in J. of Supercritical Fluids 43 (2007) 181-190 and EP1651338.

The process according to the invention is especially beneficial for use with fat powders that have been prepared using an ScMM process. Preferably the fat powder in the process according to the invention is a fat powder obtainable by supercritical melt micronisation.

It is important that the fat powder is not subjected to temperatures at which the structuring fat melts as this severely reduces the ability to structure. This temperature depends on the structuring fat as used and can routinely be determined for example based on the solid fat content profile (i.e. N-lines) of the structuring fat. Preferably the fat powder, after production, has not been subjected to temperatures above 25 degrees Celsius, more preferably 15, even more preferably 10 and most preferably 5.

### Slurry

The slurry is provided by mixing fat powder and liquid oil. A suitable method to prepare a slurry is for example by mixing fat powder and liquid oil and applying vacuum de-aeration. The slurry may be prepared using standard mixing equipment common in the field of spreads making for such use, like for example obtainable from Esco-Labor. Care must be taken to keep the temperature of the slurry equal to or below 25 degrees Celsius to prevent the crystallized structuring fat from melting and thereby at least partly loosing its ability to provide structure to the spread. However, it is allowed for the temperature of the slurry to incidentally rise above 25 degrees Celsius.

To keep the slurry in good condition, preferably the temperature of the slurry is 1 to 25 degrees Celsius, more preferably 3 to 20 and even more preferably 5 to 15.

The oil in the slurry is liquid oil and may be single oil or a mixture of different oils, and may comprise other components. Preferably at least 50 wt% of the oil (based on total amount of oil) is of vegetable origin, more preferably at least 60 wt%, even more preferably at least 70 wt%, still more preferably at least 80 wt%, even still more preferably at least 90 wt% and even still more further preferably at least 95 wt%. Most preferably the oil essentially consists of oil of vegetable origin.

### Fat soluble emulsifiers

Fat soluble emulsifiers are commonly used in the preparation of fat continuous spreads as they stabilize the desired water in oil emulsion. Likewise, water soluble emulsifiers are used in the preparation of oil in water emulsion, like for example dressings, as these emulsifiers stabilize oil in water emulsions. The Hydrophilic-Lipophilic Balance (HLB) of an emulsifier is a measure of the degree to which it is hydrophilic or lipophilic. An emulsifier having an HLB value of 1 to 8 is usually classified as being a water in oil promoting emulsifier. Emulsifiers with an HLB of more than 8 are oil in water promoting.

Fat soluble emulsifiers, like for example monoglycerides, organic acid esters of monoglycerides, native lecithin, polyglycerol esters or sucrose esters of fatty acids, by their very nature are usually added to the fat phase when an edible fat continuous spread is made.

### Aqueous phase

We have found that when at least part of the fat soluble emulsifier is added to the aqueous phase before the aqueous phase is mixed with the slurry, spreads with smaller water droplets are provided. Smaller water droplet sizes are preferred as this leads to increased microbiological stability.

The fat soluble emulsifier may be one or a combination of more fat soluble emulsifiers. Suitable emulsifiers include monoglycerides, organic acid esters of monoglycerides and polyglycerol esters of fatty acids. Preferably the emulsifier is selected from the group consisting of monoglycerides and organic acid esters of monoglycerides and combinations thereof. It will be appreciated that depending on the amount of fat used a suitable amount of emulsifier is chosen. It is within the reach of the skilled person to determine the suitable amount.

Preferably the amount of fat soluble emulsifier on total amount of product is 0.05 to 1.5 wt%, preferably 0.1 to 1, more preferably 0.15 to 0.6 and even more preferably 0.2 to 0.4.

Part of the fat soluble emulsifier may be present in the prepared slurry but preferably at least 50 wt% of the fat soluble emulsifier is present in the aqueous phase as provided under b) (i.e. at least 50 wt% of the fat soluble emulsifier is added to the aqueous phase), preferably at least 70, more preferably at least 80, even more preferably at least 90 and most preferably all.

It should be noted that minor amounts of fat soluble emulsifier, predominantly monoglyceride, are naturally present in edible oils and fats or present after modification such as interesterification. For most edible (that is refined) oils and fats the amounts present are below 0.05 wt% or even lower. A known exception is refined palm oil that may contain up to about 0.5 wt% of fat soluble emulsifier that is naturally present.

The fat soluble emulsifier is added to the aqueous phase making sure that a proper distribution of the emulsifier over the aqueous phase is achieved. Suitable methods to achieve this include applying shear and heating of the aqueous phase.

If the aqueous phase is heated it has to be cooled prior to mixing the aqueous phase with the slurry to such an extent that the temperature of the mixture of slurry and aqueous phase is kept equal to or below 25 degrees Celsius. This is to prevent the pre-crystallized structuring fat as present in the slurry from melting and thereby loosing at least part of its structuring ability.

The desired temperature of the aqueous phase prior to mixing thus depends on the temperature of the slurry. For example, a slurry temperature of about 5 degrees Celsius allows for an aqueous phase having a higher temperature taking into account the relative amounts of both phases.

Preferably the aqueous phase has a temperature of 1 to 25 degrees Celsius, more preferably 3 to 20 and even more preferably 5 to 15.

The aqueous phase may comprise other ingredients like for example salt, acidifying agent, preservative, gelling agents and thickening agents.

The aqueous phase may also comprise protein, like for example dairy protein. Protein is known to enhance the taste perception of spreads, but fat continuous spreads, especially low fat spreads, comprising protein are more difficult to make. Preferably the aqueous phase comprises 0.05 to 1 wt% on total spread composition of protein, more preferably 0.1 to 0.5 and even more preferably 0.1 to 0.3.

Preferably the protein comprises dairy protein, as for example can be found in milk powder, skimmed milk powder and butter milk powder. Standard milk powder comprises about 35 wt% of protein and this means that to include for example 0.5 wt% protein in a spread about 1.4 wt% milk powder has to be added, of course depending on the actual amount of protein present in the milk powder used.

In a preferred embodiment the aqueous phase as provided under b) further comprises oil. Spreads with an even better water droplet size and/or spreadability can thus be obtained. It will be appreciated that part of the total amount of oil used for making the spread is used for making the slurry. Preferably 1 to 30 wt% of the total amount of liquid oil is used in the preparation of the aqueous phase, more preferably 5 to 25 and even more preferably 10 to 18.

Preferably the fat soluble emulsifier is first mixed with oil to form a dispersion which is subsequently used to prepare the aqueous phase. Such a dispersion can suitably be made by dispersing the emulsifier in hot oil or heating the mixture of emulsifier and oil optionally under shear.

### Examples

### Making of spreads

Spreads with a composition according to Table 1 were made using the process as described below.

**Table 1 Spreads composition (wt% on total composition)**

| Example | **1** | **2** | **3** | **C-1** | **C-2** | **C-3** |
|---|---|---|---|---|---|---|
| AQUEOUS PHASE | | | | | | |
| Merigel 341 | 4 | 4 | 2 | 4 | 4 | 4 |
| Gelatin | 1 | 1 | - | 1 | 1 | 1 |
| Potassium sorbate | 0.18 | 0.18 | 0.13 | 0.18 | 0.18 | 0.18 |
| NaCl | 0.75 | 0.75 | 1.10 | 0.75 | 0.75 | 0.75 |
| Buttermilk powder | 0.55 | 0.55 | 0.20 | 0.55 | 0.55 | 0.55 |
| Sunflower oil | - | 3.13 | 5.00 | - | - | - |
| Dimodan HP | 0.2 | 0.2 | 0.15 | - | - | - |
| Dimodan RT | - | - | 0.15 | - | - | - |
| Tap water | Balance 100 wt% | | | | | |
| pH (using 20 wt% aqueous citric acid) | About 4.8 | | | | | |

| FAT PHASE | | | | | | |
|---|---|---|---|---|---|---|
| Fat powder (inES48) | 4.27 | 4.27 | 3.64 | 4.27 | 1.67 | 4.27 |
| Fat powder (inES48:Dimodan HP) | - | - | - | - | 2.8 | - |
| Dimodan HP | - | - | - | 0.2 | - | |
| Powdered (Dimodan HP) | - | - | - | - | - | 0.2 |
| Sunflower oil | 23.47 | 20.4 | 19.6 | 23.47 | 23.46 | 23.46 |

| | | | | | | |
|---|---|---|---|---|---|---|
| Merigel® 341: a highly crosslinked and stabilized pre-gelled waxy maize starch ex Tate & Lyle UK. inES48: an interesterified mixture of 65% dry fractionated palm oil stearin with an Iodine Value of 14 and 35% palm kernel oil Dimodan® HP: molecularly distilled mono/diacylglyceride mixture derived from fully hardened palm oil (90% monoglyceride) ex Danisco DK. Dimodan® RT: molecularly distilled mono/diacylglyceride mixture derived from hardened rapeseed oil (90% monoglyceride) ex Danisco DK. Fat powder (inES48) is a fat powder of inES48 that was obtained using a supercritical melt micronisation process similar to the process described in 'Particle formation of ductile materials using the PGSS technology with supercritical carbon dioxide', P.Münüklü, Ph.D.Thesis, Delft University of Technology, 16-12-2005, Chapter 4, pp. 41-51. Fat powder (inES48:Dimodan HP): fat powder that was obtained using a supercritical melt micronisation process as above using a mixture of inES48 and Dimodan HP in a weight ratio of 92.8:7.2. Powdered (Dimodan HP): a powder that was obtained using a supercritical melt micronisation process as above using Dimodan HP. | | | | | | |

### Slurry phase

First 1.8 kg of a slurry was made by dispersing the fat powders and, if present, the powdered (Dimodan HP) (i.e. in example C-3) in cold sunflower oil of about 5 degrees Celsius, while degassing under vacuum.
The oil was weighed and pre-cooled to 5 degrees Celsius in an Esco-Labor (ESCO-Vacuum mixer processing plant Type EL3 with 4.5 liter vessel in pharmaceutical version, ex ESCO-Labor AG, CH). The fat powder was weighed using a pre-cooled (5 degrees Celsius) vessel and scoop and added to the oil in several steps via a funnel on top of the Esco-Labor. The fat and powdered (Dimodan HP) if present were sucked stepwise into the oil using vacuum. After each step a valve under the funnel was closed and the pressure dropped significantly. The de-aeration process continued for at least 30 minutes to make sure that the de-aeration process was complete.
The slurry was homogenized and smoothed by pouring the slurry into a pre-cooled can of 5 degrees Celsius and applying an Ultra-turrax for a few minutes at the lowest level of shear.
Subsequently the slurry phase was brought into the fat feed tank of the spreads production line. The fat feed tank is a double walled stainless steel vessel with an internal diameter of 125 mm and a height of 310 mm, equipped with a ribbon stirrer, pushing the product downwards to the outlet opening in the bottom of the tank. The tank is thermo-stated at 8 degrees Celsius.

For example C-1 a slightly different method was used. The Dimodan HP was dissolved in 4.6 wt% of sunflower oil. This mixture was heated to 80 degrees Celsius to dissolve the emulsifier. This mixture was then added to remainder of the sunflower oil being cold (5 degrees Celsius) in the Esco-Labor while continuously stirring the mixture at 40 rpm. After degassing and cooling down the mixture to 5 degrees Celsius the fat powder was added as described above and the slurry preparation continued as above.

### Aqueous phase

The aqueous phase was prepared by mixing two phases (I) and (II).
Phase I being a mixture of about 70% of the water of about 70 degrees Celsius in which the starch and gelatin had been added using the Ultra-turrax at low shear. Phase II was prepared by heating the remainder of the water and adding salt, potassium sorbate and buttermilk powder to it. Both phases were mixed at low shear and the pH was adjusted by adding aqueous citric acid. The complete aqueous phase was poured into the aqueous feed tank of the spreads production line.

The aqueous feed tank is a double walled stainless steel vessel with an internal diameter of 175 mm and a height of 250 mm, equipped with an agitator (gate- stirrer type), thermo-stated at 65 degrees Celsius.

### Example 1

As above with the exception that the Dimodan HP was stirred in manually before the hot aqueous phase was poured into the aqueous feed tank.

### Example 2 and 3

Phase II was prepared as described above with the exception that an emulsion of hot sunflower oil in which the Dimodan HP had been dissolved was mixed in using the Ultra-turrax at high shear (8400 rpm) for 15 minutes.

### Spreads production

The fat feed tank and the aqueous feed tank feed via a junction point into a 50 ml double walled stainless steel pin stirrer, with two rows of 4 stator and rotor pins. During spreads production the aqueous phase was pumped first through a tubular heat exchanger, cooled at 1.5 degrees Celsius, to get a temperature drop to about 6-9 degrees Celsius, just before the junction point.
Initially the slurry phase was pumped into this system including the pin stirrer to fill it completely. Then both phases were pumped at the required ratio into the system using 2 gear pumps. After the junction point the mixture was pumped using a third gear pump with a throughput of about 12 kg/h into the pin stirrer, which resulted in a residence time of 15 seconds in the stirrer. The pin stirrer was thermo-stated at 8°C and operated at 2000 rpm. In the pin stirrer the mixture of both streams turned into a fat continuous spread.
The final product was filled into 150 ml plastic tubs and stored at 5 degrees Celsius.

### Details of the processing are given in Table 2.

**Table 2 Spreads processing conditions**

| Example | 1 | 2 | 3 | C-1 | C-2 | C-3 |
|---|---|---|---|---|---|---|
| AQUEOUS PHASE | | | | | | |
| Temp. before cooling (°C) | 66 | 64.1 | 64.9 | 63.5 | 64.1 | 62.4 |
| Temp. after cooling (°C) | 8.2 | 8.9 | 9.0 | 7.7 | 9.2 | 7.4 |
| | | | | | | |

| FAT PHASE | | | | | | |
|---|---|---|---|---|---|---|
| Temp. before pump (°C) | 12.8 | 11.3 | 14.8 | 11.2 | 13.8 | 11.8 |
| | | | | | | |

| PIN STIRRER | | | | | | |
|---|---|---|---|---|---|---|
| Temperature in (°C) | 11.6 | 12.9 | 12.8 | 11.5 | 12.9 | 12.3 |
| Temperature out (°C) | 14.4 | 14.5 | 14.5 | 13.9 | 14.4 | 15.6 |
| | | | | | | |
| Moisture [%] | 67.2 | 67.2 | 67.5 | 66.9 | 66.2 | 66.3 |

### Water droplet size distribution of spreads (D3,3 measurement)

The normal terminology for Nuclear Magnetic Resonance (NMR) is used throughout this method. On the basis of this method the parameters D3,3 and exp(σ) of a lognormal water droplet size distribution can be determined. The D3,3 is the volume weighted mean droplet diameter and σ is the standard deviation of the logarithm of the droplet diameter.

The NMR signal (echo height) of the protons of the water in a water -in-oil emulsion are measured using a sequence of 4 radio frequency pulses in the presence (echo height E) and absence (echo height E*) of two magnetic field gradient pulses as a function of the gradient power. The oil protons are suppressed in the first part of the sequence by a relaxation filter. The ratio (R=E/E*) reflects the extent of restriction of the translational mobility of the water molecules in the water droplets and thereby is a measure of the water droplet size. By a mathematical procedure -which uses the log-normal droplet size distribution - the parameters of the water droplet size distribution D3,3 (volume weighed geometric mean diameter) and σ (distribution width) are calculated.

A Bruker magnet with a field of 0.47 Tesla (20 MHz proton frequency) with an airgap of 25 mm is used (NMR Spectrometer Bruker Minispec MQ20 Grad, ex Bruker Optik GmbH, DE).

The droplet size of the spread is measured, according to the above described procedure, right after the production as well as of a spread stabilized at 5 degrees Celsius right after production for one week. This is the D3,3 after production and after storage at 5 degrees Celsius respectively.

### Spreadability

### Spreadability is determined according to the following protocol.

A flexible palette knife is used to spread a small amount of the spread on to fat free paper. The spreading screen is evaluated according to standardized scaling. A score of 1 represents a homogeneous and smooth product without any defects, a 2 refers to the same product but then with small remarks as slightly inhomogeneous or some vacuoles, a 3 refers to the level where defects become almost unacceptable, like loose moisture or coarseness during spreading. A score of 4 or 5 refers to unacceptable products, where the 4 refers to a product still having some spreading properties, but an unacceptable level of defects.

### Results

The water droplet size distribution (D3,3) of the spread was measured right after production as well as after storage for a week at 5 degrees Celsius using the method as described above. The spreadability was determined after storage for a week at 5 degrees Celsius using the method as described above. The results are given in Table 3.

**Table 3, Water droplet size and spreadability results**

| | **1** | **2** | **3** | **C-1** | **C-2** | **C-3** |
|---|---|---|---|---|---|---|
| D3,3 after production | 14 | 12 | 9 | 24 | 21 | 23 |
| D3,3 after storage | 20 | 14 | 11 | 26 | 24 | 26 |
| Spreadability after storage | 3 | 2 | 1.5 | 2-3 | 3 | 3 |

From Table 3 it can be concluded that the spreads made with the process according to the invention, examples 1, 2 and 3, have a smaller water droplet size right after production as well as after one week storage at 5 degrees Celsius.

## Claims

1. Process for the preparation of an edible fat continuous spread comprising an aqueous phase and further comprising a fat soluble emulsifier, comprising the steps of:
a. mixing fat powder and oil wherein the fat powder comprises structuring fat to provide a slurry;
b. providing an aqueous phase;
c. mixing the slurry and aqueous phase to form an oil continuous emulsion;
wherein the aqueous phase as provided under b) comprises at least part of the fat soluble emulsifier.

2. Process according to claim 1 wherein the amount of fat soluble emulsifier is 0.05 to 1.5 wt%, preferably 0.1 to 1, more preferably 0.15 to 0.6 and even more preferably 0.2 to 0.4.

3. Process according to claim 1 or 2 wherein at least 50 wt% of the fat soluble emulsifier is present in the aqueous phase as provided under b), preferably at least 70, more preferably at least 80, even more preferably at least 90 and most preferably all.

4. Process according to any one of claims 1 to 3 wherein the aqueous phase as provided under b) further comprises oil.

5. Process according to claim 4 wherein a dispersion of the oil and the fat soluble emulsifier is prepared before mixing it with the aqueous phase.

6. Process according to any one of claims 1 to 5 wherein the temperature of the slurry is equal to or lower than 25 degrees Celsius.

7. Process according to any one of claims 1 to 5 wherein the temperature of the slurry is 1 to 25 degrees Celsius, preferably 3 to 20 and more preferably 5 to 15.

8. Process according to any one of claims 1 to 7 wherein the aqueous phase has a temperature prior to mixing said aqueous phase with the slurry such that the mixture of slurry and aqueous phase is kept equal to or below 25 degrees Celsius.

9. Process according to any one of claims 1 to 8 wherein the spread comprises 5 to 40 wt% fat, preferably 10 to 35 and more preferably 15 to 30.

10. Process according to any one of claims 1 to 8 wherein the fat powder is a fat powder obtainable by supercritical melt micronisation.

## Patentansprüche

1. Verfahren zur Herstellung eines essbaren Aufstrichs mit kontinuierlicher Fettphase, der eine wässrige Phase umfasst und außerdem einen fettlöslichen Emulgator umfasst, umfassend die Schritte:
a. Mischen von Fettpulver und Öl, wobei das Fettpulver strukturierendes Fett umfasst, unter Bereitstellen einer Aufschlämmung;
b. Bereitstellen einer wässrigen Phase;
c. Mischen der Aufschlämmung und der wässrigen Phase unter Bildung einer Emulsion mit kontinuierlicher Ölphase;
wobei die wässrige Phase, wie sie unter b) bereitgestellt wird, wenigstens einen Teil des fettlöslichen Emulgators umfasst.

2. Verfahren gemäß Anspruch 1, wobei die Menge an fettlöslichem Emulgator 0,05 bis 1,5 Gew.-%, vorzugsweise 0,1 bis 1, bevorzugter 0,15 bis 0,6 und noch bevorzugter 0,2 bis 0,4 % ist.

3. Verfahren gemäß Anspruch 1 oder 2, wobei wenigstens 50 Gew.-% des fettlöslichen Emulgators in der wässrigen Phase, wie sie unter b) bereitgestellt wird, vorzugsweise wenigstens 70, bevorzugter wenigstens 80, noch bevorzugter wenigstens 90 und am bevorzugtesten der gesamte vorliegen/vorliegt.

4. Verfahren gemäß einem der Ansprüche 1 bis 3, wobei die wässrige Phase, wie sie unter b) bereitgestellt wird, außerdem Öl umfasst.

5. Verfahren gemäß Anspruch 4, wobei eine Dispersion des Öls und des fettlöslichen Emulgators vor Mischen derselben mit der wässrigen Phase bereitgestellt wird.

6. Verfahren gemäß einem der Ansprüche 1 bis 5, wobei die Temperatur der Aufschlämmung gleich oder niedriger als 25 Grad Celsius ist.

7. Verfahren gemäß einem der Ansprüche 1 bis 5, wobei die Temperatur der Aufschlämmung 1 bis 25 Grad Celsius, vorzugsweise 3 bis 20 und bevorzugter 5 bis 15 Grad Celsius ist.

8. Verfahren gemäß einem der Ansprüche 1 bis 7, wobei die wässrige Phase vor Mischen der wässrigen Phase mit der Aufschlämmung eine solche Temperatur hat, dass das Gemisch aus Aufschlämmung und wässriger Phase bei oder unter 25 °C gehalten wird.

9. Verfahren gemäß einem der Ansprüche 1 bis 8, wobei der Aufstrich 5 bis 40 Gew.-% Fett, vorzugsweise 10 bis 35 und bevorzugter 15 bis 30 Gew.-% umfasst.

10. Verfahren gemäß einem der Ansprüche 1 bis 8, wobei das Fettpulver ein Fettpulver ist, das durch superkritische Schmelzmikronisierung erhalten wurde.

## Revendications

1. Procédé pour la préparation d'une pâte à tartiner continue en graisse comestible comprenant une phase aqueuse et comprenant en outre un émulsifiant soluble dans les graisses, comprenant les étapes de:
a, mélange d'une poudre grasse et d'huile, la poudre grasse comprenant une graisse structurante, afin de donner une bouillie ;
b. fourniture d'une phase aqueuse ;
c. mélange de la bouillie et de la phase aqueuse pour former une émulsion continue en huile ;
dans lequel la phase aqueuse telle que fournie à l'étape b) comprend au moins une partie de l'émulsifiant soluble dans les graisses.

2. Procédé selon la revendication 1 dans lequel la quantité d'émulsifiant soluble dans les graisses est de 0,05 à 1,5 % en poids, de préférence de 0,1 à 1, plus préférablement de 0,15 à 0,6 et encore plus préférablement de 0,2 à 0,4.

3. Procédé selon la revendication 1 ou 2 dans lequel au moins 50 % en poids de l'émulsifiant soluble dans les graisses sont présents dans la phase aqueuse telle que fournie à l'étape b), de préférence au moins 70, plus préférablement au moins 80, encore plus préférablement au moins 90 et de manière préférée entre toutes la totalité.

4. Procédé selon l'une quelconque des revendications 1 à 3 dans lequel la phase aqueuse telle que fournie à l'étape b) comprend en outre de l'huile.

5. Procédé selon la revendication 4 dans lequel une dispersion de l'huile et de l'émulsifiant soluble dans les graisses est préparée avant d'être mélangée avec la phase aqueuse.

6. Procédé selon l'une quelconque des revendications 1 à 5 dans lequel la température de la bouillie est inférieure ou égale à 25 degrés Celsius.

7. Procédé selon l'une quelconque des revendications 1 à 5 dans lequel la température de la bouillie est de 1 à 25 degrés Celsius, de préférence de 3 à 20 et plus préférablement de 5 à 15.

8. Procédé selon l'une quelconque des revendications 1 à 7 dans lequel la phase aqueuse a une température avant le mélange de ladite phase aqueuse avec la bouillie telle que le mélange de la bouillie et de la phase aqueuse est maintenu à une température inférieure ou égale à 25 degrés Celsius.

9. Procédé selon l'une quelconque des revendications 1 à 8 dans lequel la pâte à tartiner comprend de 5 à 40 % en poids de matière grasse, de préférence de 10 à 35 et plus préférablement de 15 à 30.

10. Procédé selon l'une quelconque des revendications 1 à 8 dans lequel la poudre grasse est une poudre grasse pouvant être obtenue par micronisation par fluides supercritiques.
